# EUROPEAN PATENT APPLICATION

(11) **EP 2 244 449 A1**
(43) Date of publication of application: **27.10.2010**
(21) Application number: 09005682.1
(22) Date of filing: 23.04.2009
(51) Int. Cl.: H04M 1/725, G06F 17/30

(54) **Mobile wireless internet communication device**

(71) Applicant: novero GmbH, 40468 Düsseldorf (DE)
(72) Inventor: Schmitz, Uwe, 40299 Düsseldorf (DE)
(74) Representative: Gesthuysen, von Rohr & Eggert

(57) **Abstract**

The present invention relates to a mobile wireless Internet communication device with a small, compact, portable housing (4), an energy supply (5), a central processing unit (7) comprising at least one processor for operating the device, at least one memory unit (8) in communication with the central processing unit (7) for storing data and operating instructions in a retrievable manner, a transceiver unit (9) for receiving data from other devices (1) and for sending data to other devices (1), a user interface (11) on the housing (4) and an operating software for operating all components of the device (1) according to the intended purpose. The invention defines a dedicated user-wearable device that is designed as a single purpose micro-blogging device with the hardware and the operating software designed and/or operated to fulfill the major or all functions related to receiving, displaying, storing, retrieving, writing, editing, and sending of text based micro-blogs and the housing (4) is a self-contained, user-wearable unit.

## Description

The invention relates to a mobile wireless Internet communication device with the features of the introductory part of claim 1.

The present invention relates in general to mobile messaging by means of a Internet communication device using the actual generation of the World Wide Web in short the Internet. At present the term "Web 2.0" refers to a kind of second generation of the World Wide Web that facilitates an improved quality of communication including the evolution of Web-based communities, hosted services, social networking sites etc. The term "Web 2.0" is somewhat obscure, because there is no updated technical specification of hardware and software. So it is more the way that software developers and end-users use the Internet that defines the present level of communication as "Web 2.0".

In the Internet in recent years blogs (a short term for "weblog") became very popular. A "blog" is a type of website which is usually maintained by an individual or an institution that behaves like an individual with regular entries describing events, status updates, commentaries or other material. For substantial background relating to the term "blog" please refer to the entry at Wikipedia (en.wikipedia.org).

"Blogs" have developed into a powerful tool for the exchange of information on a personal level with nevertheless substantial general impact on the public.

A special form of "blogging" is "micro-blogging", This is a blogging that allows users to send brief text messages or micro media such as photos or short clips either to be received by anyone who is interested or by a restricted group of "followers" which can be chosen by the user. A preferred form of communication of a micro-blog is the Internet.

The content of a micro-blog differs from a classic blog in that it is typically more specific and smaller in file size. It is more like a status update in prior forms of communication. Many micro-blogs provide a short commentary on a person-to-person level or share actual news including those about products of companies (coporate blogs).

In the Internet meanwhile blog search engines have been developed, Technorati being one of the most popular search engines thereof. Access to micro-blogging is, however, still restricted due to the possibility to restrict the group of "followers".

The most popular micro-blogging service is "Twitter" (please note that "Twitter" is a registered trademark of Twitter, Inc., USA). However, more than 100 similar micro-blogging sites internationally were counted in 2007, A micro-blogging service like "Twitter" is a social networking service based on micro-blogging. It enables its users to send and read other users' updates. Updates are displayed on the user's profile page and delivered to other users as selected (for further details see the entry "Twitter" at the Wikipedia website).

Micro-blogging like that in the "Twitter" network needs an Internet communication device. Nowadays it is possible to have a mobile wireless Internet communication device like an advanced mobile phone (e.g. Apple's iPhone) that allows access to a micro-blogging service like "Twitter".

The present prior art discloses a multi-purpose device like a mobile phone that simultaneously is a mobile wireless Internet communication device (WO 2006/029331 A2). Such multi-purpose device is mainly a mobile phone or an Internet communication device, but additionally supports a micro-blogging service like "Twitter".

The problem of the present invention is to provide a mobile wireless Internet communication device that is more specifically designed to support a micro-blogging service or in general a mobile social network service.

The above mentioned problem is solved by a mobile wireless Internet communication device with the features of the introductory part of claim 1 which additionally comprises the features of the characterizing part of claim 1. Further preferred improvements and specifics of the communication device according to claim 1 are the subject matter of the dependent claims.

The essential aspect of the invention is that the device is designed as a single purpose device just for micro-blogging in the respective micro-blogging network like e. g. "Twitter". In particular the hardware and the operating software is designed and/or operated to fulfill preferably only the major or all functions related to handling text based micro-blogs. However, this communication device is a dedicated wearable device. To achieve this the housing is designed as a self-contained user-wearable unit.

In general it is possible to extend the micro-blogging capability of the communication device beyond text-based micro-blogs to also short clips or photos etc. Nevertheless, the main point is to concentrate the communication device to just the single purpose of micro-blogging in the selected social network.

Now, the present invention will be described in more detail with reference to the drawings which just describe a preferred, non limiting embodiment of the invention. In the drawings
- Fig. 1: shows a functional block diagram illustrating an Internet communication system,
- Fig. 2: shows an embodiment of an Internet communication device according to the invention designed as a user wearable unit.
- Fig. 3: shows a block diagram of the structure of a communication device according to the invention.

In general, for the terms "Web 2.0", "blog", "blogging", "micro-blog", "micro-blogging", "social networking service", "Twitter" reference can be made to the introductory part of the present specification as well as to the website of Wikipedia.

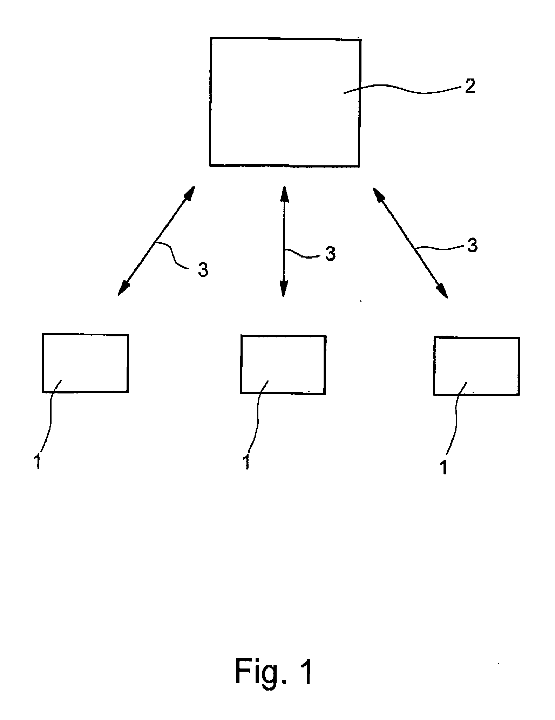

Now, Fig. 1 discloses the general structure of a mobile wireless Internet communication system. There are the front end communication devices 1 which are preferably mobile wireless Internet communication devices but may also be semi-mobile or stationary devices. In general the term "device" in its general meaning may include mobile phones, PDAs, pocket PCs, while stationary devices may include PCs etc.

The back end is here represented by a server 2, preferably of a social networking service like "Twitter" (please note that "Twitter" is a registered trademark of Twitter, Inc., USA).

As shown in Fig. 1 the system includes the mobile wireless network 3 represented by the two-headed arrows 3. The network 3 is in communication with and enables communication between each of the devices 1 and the server 2. In particular the network 3 uses a telecommunications standard like GSM, UMTS or the like for mobile wireless communication.

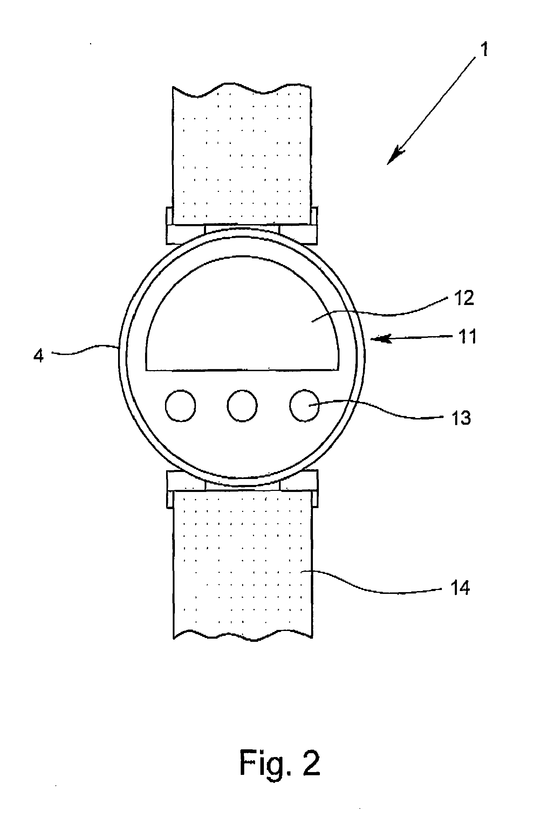

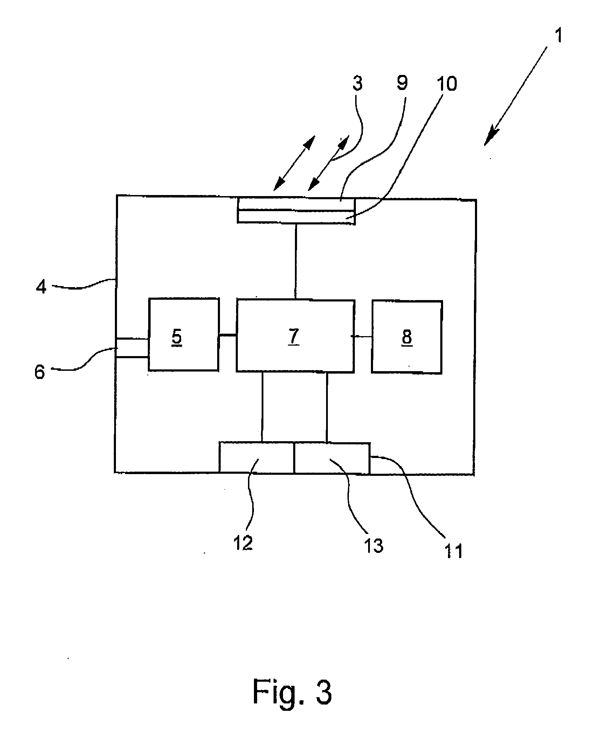

The invention relates to a mobile wireless Internet communication device 1. Such a specific device 1 is disclosed in a preferred embodiment in Fig. 2 with its technical layout disclosed in Fig. 3 in the form of a block-diagram.

Fig. 2 and 3 show a small, compact, portable housing 4 of the device 1. Fig. 3 shows in the housing 4 an energy supply 5 which is preferably in the form of a rechargeable battery, its docking socket 6 being indicated as well.

Further, the device 1 comprises in the housing 4 a central processing unit 7 comprising at least one processor for operating the device 1. Associated with the central processing unit 7 is at least one memory unit 8 which can have the design of any generally known memory. The memory unit 8 is in communication with the central processing unit 7 for storing data and operating instructions in a retrieveable manner.

A transceiver unit 9 is provided in the housing 4 for receiving data from other devices 1 over the Internet and for sending data to other devices 1 over the Internet. The transceiver unit 9 comprises wireless a network authorization unit 10 which is preferably in the form of a data SIM-card unit. The authorization unit 10, preferably with the SIM-card based on a flat rate payment schedule, allows the device 1 to be constantly online in the network 3.

The device 1 is controlled by means of a user interface 11 comprising a display 12 and at least one input key 13. In the present embodiment in Fig. 2 the display 12 is a simple text display while there are three input keys 13 indicated as push buttons. However, it is preferable that the display 12 is a touch screen display and the input keys 13 are just icons on the touch screen display.

In the memory unit 8 of the device 1 an operating software is stored for operating all components of the device according to the intended purpose.

Now, in the present invention, the device 1 is designed as a single purpose micro-blogging device with the hardware 7, 8, 9, 11 and the operating software designed and/or operated to fulfill the major or all functions related to receiving, displaying, storing, retrieving, writing, editing, and sending of text based micro-blogs. As can be seen in Fig. 2 the housing 4 is a self-contained, user-wearable unit.

As we explained above, with a data SIM-card or the like in the authorization unit 10 and by use of a flat rate payment schedule it is possible that the wireless network authorization unit 10 is constantly or almost constantly "on" so that the device I is constantly or almost constantly online.

In a preferred embodiment it is provided that the software is designed to reset the device 1 at intervals that are preset or, preferably, user-defined. So it is possible to take care of the restricted capacity of the memory unit 8 and to limit the number of micro-blogs that are stored in the memory unit 8.

In a further preferred embodiment it is provided that the display 12 is a scrollable text display of preferably only a small number of, preferably four or five, lines.

As is typical for a micro-blog the software should be designed to restrict the length of a micro-blog to a maximum of less than 200, preferably of 140 characters. 140 characters is the typical maximum length of a text message in the "Twitter" network.

In the present invention it is provided that the housing 4 is a self-contained, user-wearable unit. Fig. 2 shows a preferred embodiment thereof as the housing 4 is designed as a wristwatch housing with a strap 14. However, the dedicated user-wearable unit can be designed like a pocket watch, can be designed as a belt-wearable housing, can also be a pendant of some kind, a bracelet, a bracelet pendant, a necklace, a necklace pendant or the like. It can also be the housing 4 in the form of a badge or can be in the form of a pocket diary or a pocket book.

In a most preferred embodiment the device 1 of the invention comprises a low-cost communication transceiver unit 9 with a data SIM-card in the authorization unit 10 featuring a flat rate payment schedule. The display 12 of the user interface 11 has only four to five lines for a scrollable text display. The input keys 13 allow for easy text input either directly or by icons on a touch screen display 12. Energy supply 5 is powerful enough to provide for some days follower functions.

As in a stationary or multi-purpose device the inventive mobile wireless Internet communication device 1 may support multiple accounts in a social network service.

The system is refreshing at user defined intervals. Reply and direct messages are displayed. The number of still unread micro-blogs is shown. Deleting read or unread micro-blogs is easily done. An alert mode may be selected to show new micro-blogs. Any kind of user profile page may be accessed quickly. A selection between public and group-restricted micro-blogs is easily done. The user interface provides shortcuts for a number of functions. There is even the possibility to have an audio unit added for notification of any kind, in particular incoming new micro-blogs.

## Claims

1. Mobile wireless Internet communication device comprising
a small, compact, portable housing (4),
an energy supply (5), preferably in the form of a rechargeable battery,
a central processing unit (7) comprising at least one processor for operating the device,
at least one memory unit (8) in communication with the central processing unit (7) for storing data and operating instructions in a retrievable manner,
a transceiver unit (9) for receiving data from other devices (1) and for sending data to other devices (1), all over a wireless network and the Internet,
- the transceiver unit (9) comprising a wireless network authorization unit (10), preferably in the form of a data SIM-card unit,
a user interface (11) on the housing (4),
- the user interface (11) comprising a display (12), which may be provided as a touch screen, and at least one input key (13), wherein at least one input key (13) may be provided a an icon on the touch screen display, and
an operating software for operating all components of the device (1) according to the intended purpose,
**characterized in that**
the device (1) is designed as a single purpose micro-blogging device with the hardware and the operating software designed and/or operated to fulfill the major or all functions related to receiving, displaying, storing, retrieving, writing, editing and sending of text based micro-blogs and
the housing (4) is a self-contained, user-wearable unit.

2. Communication device according to claim 1, **characterized in that**
the operating software is designed and/or operated to only fulfill the listed functions.

3. Communication device according to claim 1 or 2, **characterized in that**
the wireless network authorization unit (10) is constantly or almost constantly "on" so that the device (1) is constantly or almost constantly online.

4. Communication device according to any one of the preceding claims, **characterized in that**
the software is designed to reset the device (1) at intervals that are preset or, preferably, user-defined.

5. Communication device according to any one of the preceding claims, **characterized in that**
the display (12) is a scrollable text display of preferably only a small number of, preferably four or five, lines.

6. Communication device according to any one of the preceding claims, **characterized in that**
the software is designed to restrict the length of a micro-blog to a maximum of less than 200, preferably of 140 characters.

7. Communication device according to any one of the preceding claims, **characterized in that**
the user interface (11) comprises a small number of input keys (13), preferably only three or four input keys (13), preferably partly or completely as touch screen icons.

8. Communication device according to any one of the preceding claims, **characterized in that**
the housing (4) is designed as a wristwatch housing, a belt-wearable housing, a pendant, a bracelet, a bracelet pendant, a necklace, a necklace pendant, a badge, a pocket diary, or a pocket book.

## Amended claims

### Amended claims in accordance with Rule 137(2) EPC.

**1.** Mobile wireless single purpose communication device comprising a small, compact, portable housing (4) constructed as a self-contained, user-wearable unit,
an energy supply (5), preferably in the form of a rechargeable battery,
a central processing unit (7) comprising at least one processor for operating the device,
at least one memory unit (8) in communication with the central processing unit (7) for storing data and operating instructions in a retrievable manner,
a unit (9) for receiving data from other devices (1) over a wireless network,
a user interface (11) on the housing (4), the user interface (11) comprising a display (12) and at least one input key (13), and
an operating software for operating all components of the device (1) according to the intended purpose,
wherein the device (1) is designed as a single purpose device with the hardware and the operating software designed and/or operated to fulfill the major or all functions related to receiving, displaying, storing and retrieving of short text based messages,
**characterized in that**
the unit (9) is designed as a transceiver unit (9) for receiving data from other devices over the wireless network in combination with the Internet, and also for sending data to other devices (2) over the wireless network in combination with the Internet,
the transceiver unit (9) comprises a wireless network authorization unit (10), preferably in the form of a data SIM-card unit,
the device is designed for Internet-micro-blogging only with the hardware and the operating software designed and/or operated to fulfill the major or all functions related to receiving, displaying, storing and retrieving as well as writing, editing, and sending of text based micro-blogs.

**2.** Communication device according to claim 1, **characterized in that**
the display (12) is provided as a touch screen and at least one input key (13) is provided as an icon on the touch screen display.

**3.** Communication device according to claim 2, **characterized in that**
the user interface (11) comprises a small number of input keys (13), preferably only three or four input keys (13), preferably completely as touch screen icons.

**4.** Communication device according to any one of the preceding claims, **characterized in that**
the software is designed to restrict the length of a micro-blog to a maximum of less than 200 characters, preferably of 140 characters.

**5.** Communication device according to any one of the preceding claims, **characterized in that**
the housing (4) is designed as a wristwatch housing, a belt-wearable housing, a pendant, a bracelet, a bracelet pendant, a necklace, a necklace pendant, a badge, a pocket diary, or a pocket book.

**6.** Communication device according to any one of the preceding claims, **characterized in that**
the operating software is designed and/or operated to only fulfill the listed functions.

**7.** Communication device according to any one of the preceding claims, **characterized in that**
the wireless network authorization unit (10) is constantly or almost constantly "on" so that the device (1) is constantly or almost constantly online.

**8.** Communication device according to any one of the preceding claims, **characterized in that**
the software is designed to reset the device (1) at intervals that are preset or, preferably, user-defined.

**9.** Communication device according to any one of the preceding claims, **characterized in that**
the display (12) is a scrollable text display of preferably only a small number of, preferably four or five, lines.
